# EUROPEAN PATENT SPECIFICATION

(11) **EP 0 449 521 B1**
(45) Date of publication and mention of the grant of the patent: **11.09.1996**
(21) Application number: 91302504.5
(22) Date of filing: 22.03.1991
(51) Int. Cl.: E04H 6/06

(54) **Car parking system and method**
Parkplatzvorrichtung und Methode
Dispositif de parcage de véhicules et méthode

(30) Priority: 25.03.1990 IL 93875
(43) Date of publication of application: 02.10.1991
(73) Proprietor: Golan, Zeev, Herzliya (IL)
(72) Inventor: Golan, Zeev, Herzliya (IL)
(74) Representative: Driver, Virginia Rozanne

(56) References cited:
- EP-A- 0 050 274
- EP-A- 0 146 176
- EP-A- 0 353 833
- DE-A- 2 260 627
- DE-A- 2 518 198
- DE-A- 3 033 951
- FR-A- 2 461 078

## Description

The present invention relates to a parking system or device for parking motor vehicles in parking lots and permits doubling the effective parking area of each parking space according to the subject matter disclosed by the preamble of claim 1. Such a parking system is known from EP-A-0 146 176.

A number of devices are known which permit doubling of the effective parking area of a parking lot. These devices are based on the LIFT principle of garages and are coupled to a three-phase electrical system. The basic structure of these devices is a lifting platform which supports the lifted vehicle and two pillars which are disposed next to the vehicle in the middle or two thirds of the way along the platform. This sort of structure requires a parking space which is the width of the widest vehicle plus the width of the door in order to permit the driver and passengers to get out after parking the vehicle. The existence of pillars on both sides of the vehicle requires aligning the vehicle in an accurate manner in the parking space, which reduces the ease of use of these devices. When a number of devices are mounted in a parking lot, the lot looks like an industrial zone full of pillars and spoils the aesthetic appearance of the parking area.

In EP-A-0050274 a vehicle hoisting device is described for use in garages. The device includes fixed side members which support a hydraulic piston connected to a crosspiece which in turn is connected to two tiltable channel members. The channel members are provided to receive the wheels of the vehicle to be hoisted and requires that the vehicle be aligned with respect to the channel members when the vehicle is being driven onto the device. The vehicle is hoisted in a single movement by the action of the hydraulic piston on the crosspiece. The hydraulic piston and the channel members are pivotally attached to the side members so as to enable pivotal movement only of the piston and the channel members relative to the side members when the channel members are being raised or lowered.

EP-A-146176 discloses a liftable platform arrangement for allowing one vehicle to be parked above another. The arrangement has a ramp which can be raised and lowered by two pairs of levers, arranged on opposed sides of the ramp. Each pair of levers operates in the manner of pantograph so as to impart both a rotary and a translational movement to the ramp. When the ramp is in a raised position, a second vehicle can be parked below the ramp, the front end of the second vehicle being received between the two pairs of levers. The front end of the upper vehicle extends substantially beyond the front of the second vehicle.

The present invention overcomes the deficiencies of the prior art.

It is an object of this invention to provide a system or device for doubling the effective parking area of existing parking lots, especially in big cities, by means of a convenient, aesthetic, safe and reliable system. The system or device permit easy accessibility and entry into the parking area without being restricted by the width of the parking space or the direction in which the vehicle enters the area. (In some existing systems, it is necessary to enter the parking space by driving in reverse.)

There is thus provided in accordance with the present invention a parking system for permitting parking of two vehicles in a single space comprising a vehicle support member adapted to support a vehicle over a parking area including a rear end portion adapted to permit travel of a vehicle thereacross, said vehicle support member further having a front end portion; and ground-located fixed support means - e.g. control box (12,60), reinforcing bars (20) - connected to said front end portion of said vehicle support member and located beneath said vehicle support member, lifting means for raising and lowering said rear end portion of said vehicle support member whereby in said raised position said rear end portion is elevated with respect to said front end portion so as to provide vertical clearance between said vehicle support member and the parking area sufficient to enable entry of a vehicle to the parking area beneath the vehicle support member and whereby in said lowered position said rear end portion is adjacent a ground surface thereby to allow travel of a vehicle from said vehicle support member to the ground surface and from the ground surface to said vehicle support member, said vehicle support member being in the form of a platform capable of supporting all of the wheels of a vehicle and said lifting means includes means operative to raise and lower said front end portion of said platform with respect to said fixed support means,
characterised in that said fixed support means defines a horizontal pivot axis located in a predetermined vertical plane which intersects said front end portion of said platform in the raised position of said platform, said platform being arranged for pivoting about said horizontal pivot axis, said fixed support means comprising a fixed support member and at least one movable member pivotally connected with one end to said horizontal pivot axis the latter being provided on the fixed support member, said movable member being connected with its other end to said front end portion of said platform and wherein said movable member is in general alignment with said vertical plane when said platform is in the raised position.

According to a preferred embodiment, the system further includes a lower platform for receiving a second vehicle, the lower platform being laterally movable from one space to an adjacent space.

The present invention will be further understood and appreciated from the following detailed description taken in conjunction with the drawings in which:
Fig. 1a is a schematic side view of an embodiment of the vehicle parking device of the present invention in the lowered orientation;
Fig. 1b is a schematic side view of the vehicle parking device of Fig. 1a in the raised orientation;
Fig. 1c is a perspective view of the parking device of Fig. 1a;
Fig. 2 is a schematic view of a parking device according to the present invention with two cars parked thereon;
Fig. 3 is a schematic view of a row of vehicles parked in a parking lot;
Fig. 4 is a schematic view of a parking device according to an alternate embodiment of the invention;
Fig. 5 is a schematic view of the lateral drive system of the lower surface according to one embodiment of the invention;
Figs. 6a and 6b show schematic side views of a parking device according to an alternate embodiment of the present invention in respective lowered and raised orientations; and
Figs. 7a and 7b show schematic side views of a parking device, this device not being an embodiment of the present invention, in respective lowered and raised orientations.

### DETAILED DESCRIPTION OF THE INVENTION

The present invention relates to a parking device and system which permits the parking of one vehicle above another. One embodiment of this invention is suitable for private users, where two cars can be parked in a single parking space. The device of this embodiment includes only a lifting platform and a control box. This system requires that the bottom car be removed from the parking zone before lowering the upper car.

A second embodiment is suitable for a parking lot including a number of parking spaces. This embodiment permits the lowering of the upper car and removal thereof from the parking lot without requiring entering and driving of the lower car.

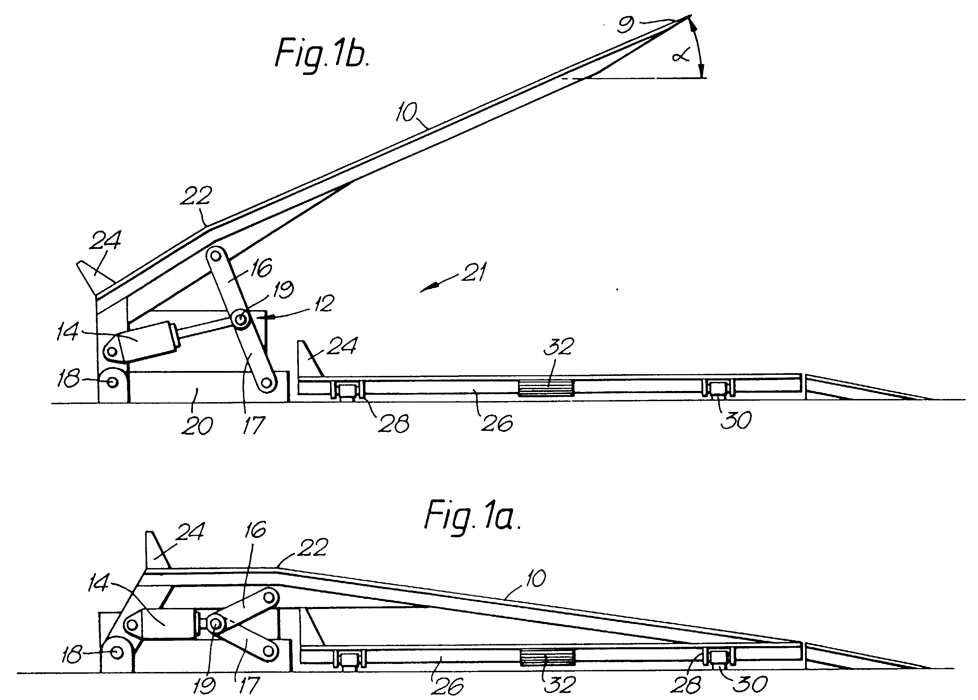

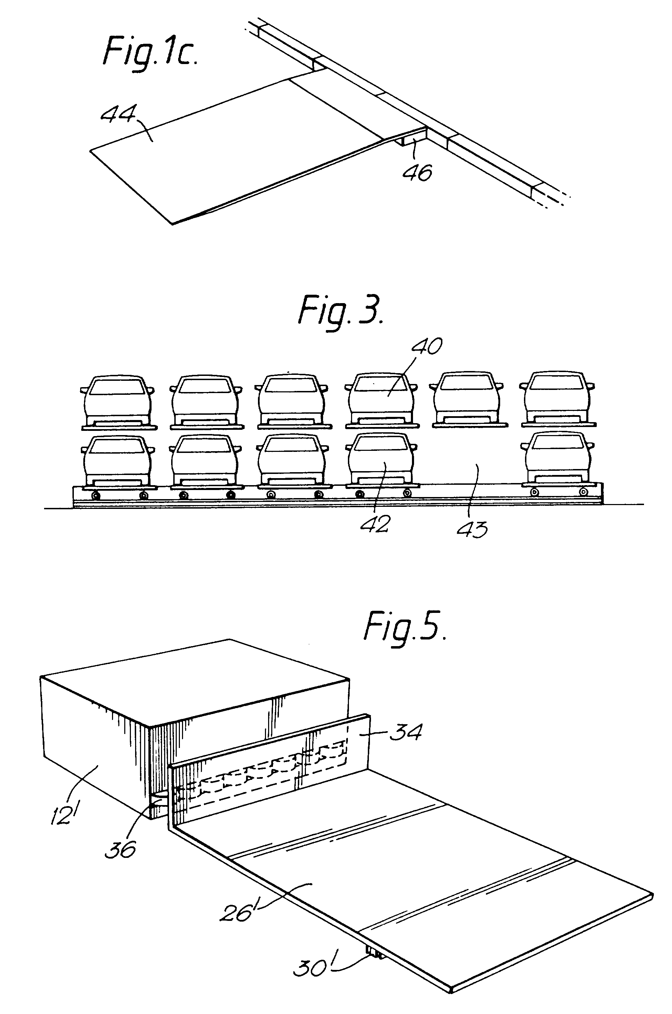

Referring now to Figs. 1a, 1b and 1c, there is shown a parking device constructed and operative in accordance with the present invention in schematic side view in respective lowered and raised orientations and in perspective view. As can be seen from Fig. 1c, the device of the present invention provides a compact, aesthetic aspect to drivers, with no pillars, etc.

The parking device includes an upper lifting platform 10 adapted for lifting a parked car from a lowered orientation (Fig. 1a) when there is no car underneath, to a raised orientation (Fig. 1b) when there is a second car to be parked in the space 21 underneath.

Lifting platform 10 is actuated by a control box 12 which may include, for example, an hydraulic piston 14 and arms 16 and 17 for raising the platform about an axis 18. Arms 16 and 17 comprise a plurality of metallic rods which pivot about an axis 19. When platform 10 is in the raised orientation, it can be seen that piston 14 is fully extended and arms 16 and 17 are locked in the support orientation. Preferably reinforcing bars 20 are provided on the ground to strengthen and support the parking device.

Control box 12 preferably contains all the components used for operating the parking device. In this drawing the operating system is hydraulic. The control box therefore includes the power system, pump, oil reservoir and lifting piston. Alternatively, the device can also be operated by a simple mechanical system of poles and screw actuated by a motor.

If the system is mechanical, the control box includes a motor (AC or DC) to operate the lifting system, lifting arms having a nut to raise and lower the platform and a screw to connect the motor to the lifting arms.

According to one embodiment, the system operates with grid voltage. Alternatively, the system can function on an internal power source in one of two ways:

In one method of operation, the control box contains a 12 volt battery which operates a DC motor. The battery is charged by the parking lot owner. In a second method of operation, the system works directly from the battery of the vehicle to be parked under the platform.

According to one embodiment, the control box is partly or completely below ground level, so that there will be little or no gradient when driving on to the lifting platform.

According to a preferred embodiment of the present invention, the lifting platform 10 defines a bend 22 therealong, disposed between the front and back wheels of the vehicle thereon. Bend 22, which preferably defines an angle of between about 145 and 175 degrees, will be described in greater detail hereinbelow.

The lifting platform also defines an upstanding front edge 24. Front edge 24 serves as a stop member to prevent the vehicle parked thereon form rolling off in the forward direction.

According to a preferred embodiment, there is also provided a lower platform 26 on which a second car can park. Lower platform 26 is most preferably provided with means for lateral and/or rearward movement. It will be appreciated that in a large parking lot, each lower car will sit on its own lower platform. It is possible to leave one parking space without a lower platform in order to permit the lateral movement of the other platforms around the lot. Alternatively, each platform can be movable rearwardly and then laterally to permit removal of a lower car without displacing other cars in the lot.

Thus, when it is desired to remove an upper car underneath which another car is parked, the lower platform 26 on which the lower car is parked can be moved to an adjacent vacant space on one side or the other, thereby permitting the upper car to be lowered and removed without requiring driving of the lower car. One suitable mechanism is illustrated in Figs. 1a and 1b and includes a metallic lower platform lying on a plurality of wheels 28 (preferably 4 pairs of wheels) arranged to roll on tracks 30 on or in the ground of the parking area. Movement of lower platform 26 is preferaby activated by a motor 32 connected to the lower part of the lower platform, or by any other means.

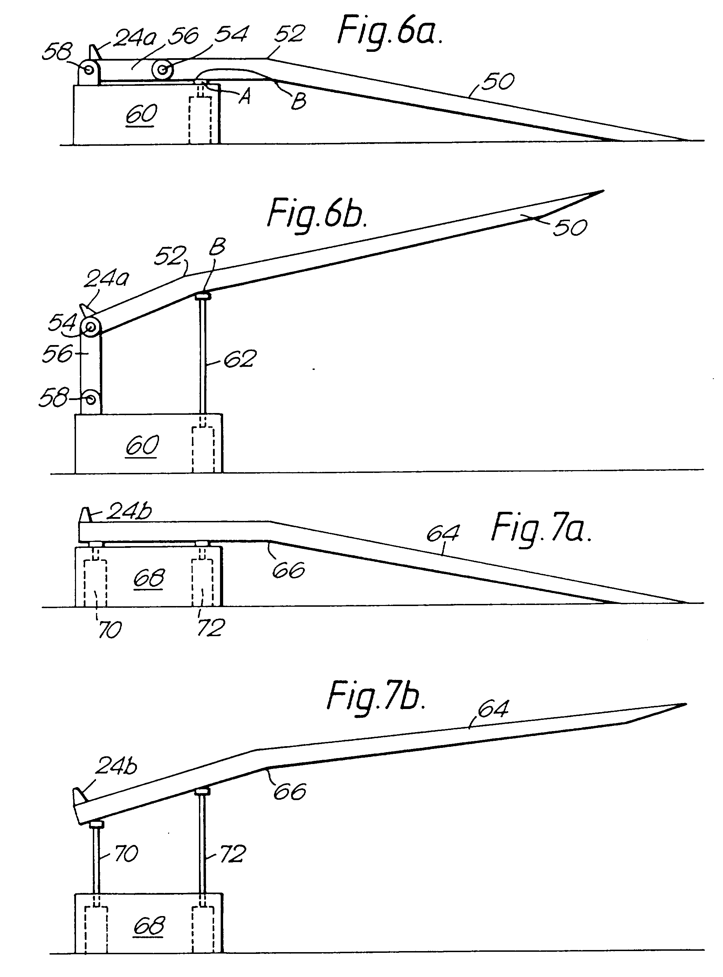

An alternate mechanism is illustrated in Fig. 5. In this embodiment, lower platform 26 defines an upstanding edge 34 along the end thereof adjacent control box 12'. This embodiment is operated by a drive wheel system operated by a motor (not shown) located within the control box 12'. This drive wheel system consists of a plurality of rubber wheels 36 activated by the motor which engage edge 34 of lower platform 26'. Activation of these wheels will cause the entire lower platform to roll to one side or the other, permitting movement of the lower surface between the two ends of the control box. A guide rail 30' underneath lower platform 26' ensures that only lateral movement occurs.

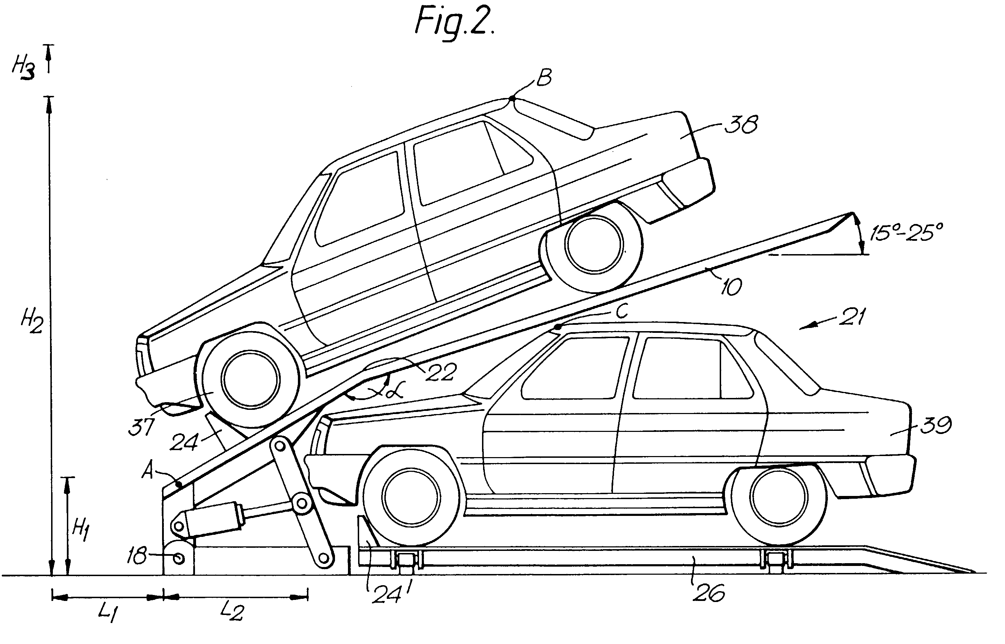

The guiding principle of the present invention is to permit two vehicles to park in a space substantially the size of a space for a single vehicle in conventional lots. With reference to Fig. 2, it can be seen that were the lifting platform to be affixed to the ground, the distance required from the end of the space to the frontmost part of the lower car would be L₁ + L₂. This distance is substantially longer than that available in a conventional parking space. Accordingly, it is a particular feature of the present invention that the lifting platform is affixed to its support at a point A along the imaginary line of a platform affixed to the ground but raised above the ground by a height H₁. It will be apparent that the shorter the distance L₂, the higher will be the point A.

On the other hand, the greater the height H₁, the higher will be the ascent of the first car onto the lifting platform. Accordingly, a compromise must be made in order to provide as short an L₂ as possible consistent with a sufficiently low H₁.

In certain parking areas, the height of the parking lot is also limited. Accordingly, it is desired to park the upper car in such a position that its highest point B will be as low as possible. On a straight platform, the height of point B would be H₂ + H₃ This height is more than the height of two vehicles.

Accordingly, according to a preferred embodiment of the invention, at least one bend 22 is provided in the platform. This bend 22 serves two purposes. First, it permits lowering the front end of the platform A to about 40 to 45 cm above the ground, thereby providing a less steep ramp than a comparable straight platform. This is particularly desirable in order to prevent discomfort among drivers presented with a steep slope. And second, it permits a most efficient use of the volume of the parking space in that the lifting platform approaches the highest point of the lower car C. At the same time, the disposition of the bend 22 between the wheels of the upper vehicle utilizes the vacant space under the upper vehicle.

Thus, bend 22 of about 145 to 175 degrees permits the lowering of the highest point of the upper car to H₂, a substantial savings in height. In addition, the specific location of the the bend between the wheels and the size of the angle also affect the length of L₂ . Thus, by moving bend 22 rearwardly under the upper car, L₂ can be shortened accordingly, thus creating savings both in length and height of the required parking space.

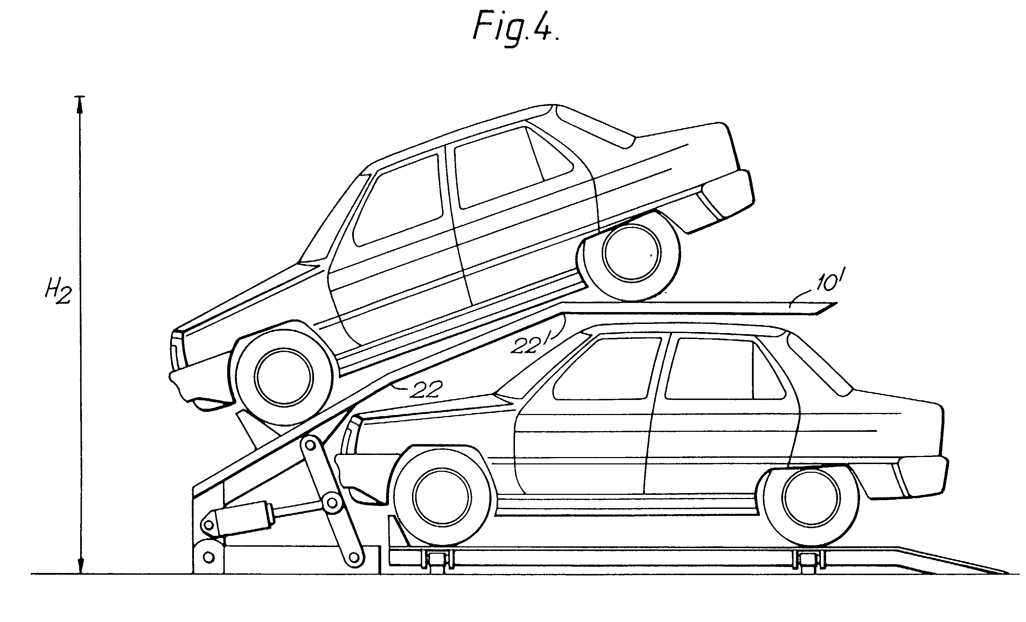

In Fig. 4, another embodiment of the invention is shown wherein two bends 22 and 22' are provided in the lifting platform 10'. This permits the lifting platform to conform even more closely to the contour of the lower vehicle. In this embodiment, the height H₂ of the highest point of the car is even lower than that in Fig. 2.

Referring again to Fig. 2, there is shown the parking device of Fig. 1a in operation with first and second cars 38, 39 parked thereon. It will be appreciated that the front wheels 37 of the upper car 38 are supported by upstanding edge 24 of the upper platform. The angle of inclination of the upper platform is illustrated as the preferred angle of about 15 to 25 degrees with respect to the horizontal. It will be noted that this permits a second car 39 to drive onto the lower platform until it reaches upstanding edge 24 of the lower platform.

With reference to Fig. 3, a system according to the present invention for use in a large parking lot is illustrated. It can be seen that this invention permits the parking of a plurality of cars one on top of the other. When it is desired to remove one car, say an upper car 40, the car 42 underneath it can be moved to an adjacent empty lower space 43 by moving the platform on which it is parked. This obviates the need for an attendant to drive the lower car out of its space and back in again after the upper car is removed.

Figs. 6a and 6b illustrate an alternate embodiment of a parking device according to the present invention. This device includes a platform 50 defining a bend 52 as described above pivotably affixed about an axis 54 on an arm (movable member) 56 which is, in turn, pivotably affixed about an axis 58 to the control box 60. This control box 60 also serves as a support member. Disposed in control box 60 is an hydraulic piston 62 which serves to lift platform 50 gradually in two stages about axes 54 and 58. Piston 62, for example, may include a ball at its end which rolls in a track in platform 50 during the raising and lowering. An upstanding abutment 24a prevents the car from rolling off the platform 50.

Figs. 7a and 7b illustrate a further parking device. However this device is not an embodiment of the present invention. This device includes a platform 64 defining a bend 66 as described above mounted on a control box 68. Disposed in control box 68 are two hydraulic pistons 70, 72 which serve to lift platform 64 gradually to the desired height and angle. From a height of about 20 cm, the front of the lifting platform is raised to the desired height by piston 70, while piston 72 lifts the rear of the platform to the desired angle. This embodiment permits the lowering of the height of the control box and of the platform in its lowered orientation to about 20 cm, which is barely perceived as a slope by a driver. In addition, this embodiment permits the shortening of the length L₂ since the pistons can be located relatively close to one another. prevent uncontrolled lowering of the vehicle, as known.

The structure of the devices of embodying the present invention is different in a number of basic ways from those devices which exist on the market:
a. The platform which lifts the car is supported on the ground proximate one end thereof. The platform pivots about this support, thereby raising the other end. This method ensures the safety and high reliability of the device relative to other devices on the market.
b. The device is built without lateral pillars or parts which protrude beyond the parking space. This method ensures a highly aesthetic appearance of the parking area.
c. Since the device has no side pillars, it provides flexibility and ease of entering and leaving a parking space and maximum convenience for parking a vehicle. It also permits operation of a laterally moving platform for the purpose of moving the lower car to the left or right. This is done in order to lower the upper car in the device without touching the lower car.
d. The device can be operated by means of a DC motor operated by the vehicle battery or by a battery located in the device itself. This method permits installation of the device without expensive electrical installation. Rather, there is low installation cost for do-it-yourself operation.

The method of operating the device is as follows, with further reference to Fig. 2.

A first car 38 arrives at the parking area and drives up onto the upper platform 10 of the device. The ascent to platform 10 can be accomplished by driving forwards or backwards. When a second car 39 arrives at the parking lot, the driver of the second car, or the parking attendant, activates the piston 14 by coupling the second car to a power cable (or the battery or central power system existing in the control box). The upper platform 10 lifts up pivotally about axle 18 and permits the second car to drive onto lower platform 26 in the space 21 beneath. Second car 39 enters until its forward wheel is stopped by upstanding edge 24' of lower platform 26.

When it is necessary to remove a car from the upper platform of a parking space, it is possible to move the lower car to the right or left into an empty space, and lower the upper car which one wants to remove. The activation system for movement to the right and left can be worked from a motor which is located in the base of the lower platform or from a drive system located in the control box.

The lifting platform is shaped in such a way that the upper vehicle is raised primarily at its rear end, which provides stability and safety of the device and, on the other hand, does not give the feeling of a car hanging completely in the air, which could generate apprehension that the car might fall.

## Claims

1. A parking system for permitting parking of two vehicles in a single space comprising a vehicle support member (10,10';50) adapted to support a vehicle over a parking area including a rear end portion (9) adapted to permit travel of a vehicle thereacross, said vehicle support member (10,10',50) further having a front end portion (A); and ground-located fixed support means (12, 20, 56, 60) - e.g. control box (12, 60), reinforcing bars (20) - connected to said front end portion (A) of said vehicle support member (10;10';50) and located beneath said vehicle support member (10,10',50), lifting means (14;62) for raising and lowering said rear end portion (9) of said vehicle support member (10;10';50) whereby in said raised position said rear end portion (9) is elevated with respect to said front end portion (A) so as to provide vertical clearance between said vehicle support member (10;10';50) and the parking area sufficient to enable entry of a vehicle to the parking area beneath the vehicle support member (10,10',50) and whereby in said lowered position said rear end portion (9) is adjacent a ground surface thereby to allow travel of a vehicle from said vehicle support member (10,10',50) to the ground surface and from the ground surface to said vehicle support member (10,10',50), said vehicle support member (10,10',50) being in the form of a platform capable of supporting all of the wheels of a vehicle and said lifting means (14;62) include means (56) operative to raise and lower said front end portion (A) of said platform with respect to said fixed support means (12, 20, 56, 60),
characterised in that said fixed support means (12,20,56;60) defines a horizontal pivot axis (18;58) located in a predetermined vertical plane which intersects said front end portion (A) of said platform in the raised position of said platform, said platform being arranged for pivoting about said horizontal pivot axis (18,58), said fixed support means (12,20,56,60) comprising a fixed support member (12,20,60) and at least one movable member (56) pivotally connected with one end to said horizontal pivot axis (18,58), the latter being provided on the fixed support member, said movable member (56) being connected with its other end to said front end portion (A) of said platform (10;10';50) and wherein said movable member (56) is in general alignment with said vertical plane when said platform is in the raised position.

2. A parking system according to claim 1, characterised in that said platform (10;10';50) is configured to support a vehicle such that when in use an end portion of the vehicle extends over said front end portion (A) of said platform.

3. A parking system according to either of claims 1 or 2 characterised in that in said raised position, said rear end portion (9) is elevated above said front end portion (A) by a predetermined slope angle.

4. A parking system according to any one of the preceding claims characterised in that said platform (10;10';50) is an upper vehicle support platform and said system further includes a lower vehicle support platform (26;26') which is adapted for selectable location on the parking area and in a first operative position is located immediately beneath said upper vehicle support platform and means (28,30;34,36) for transversely moving said lower platform (26;26') between the first operative position and a selected second operative position whereat said lower platform is not located immediately beneath said upper platform.

5. A parking system according to claim 4, characterised in that said system is a first vehicle parking- means and there is further provided at least one further vehicle parking means arranged in a side-by-side arrangement therewith.

6. A parking system according to any preceding claim, characterised in that the movable member (56) of the fixed support means is pivotally connected at a first end to said front end portion (A) of said platform (50) and pivotally connected at a second end to said fixed support member (60).

7. A parking system according to any one of the preceding claims, characterised in that said system further includes wheel engagement means (24) associated with said front end portion (A) of said platform (10;10';50) for engaging wheels of a vehicle located on said platform.

## Patentansprüche

1. Parkvorrichtung zum Parken von zwei Fahrzeugen auf einem einzigen Platz, welche aufweist: ein Fahrzeugstützteil (10;10';50), der zum Tragen eines Fahrzeugs über einer Parkfläche geeignet ist und einen rückwärtigen Endabschnitt (9) aufweist, der ein Darüberfahren eines Fahrzeugs ermöglicht, wobei der Fahrzeugstützteil (10;10'; 50) außerdem einen vorderen Endabschnitt (A) aufweist; sowie eine auf dem Boden angeordnete feste Stützeinrichtung (12,20,56,60) - z.B. einen Steuerkasten (12,60), Verstärkungsstäbe (20) -, die mit dem vorderen Endabschnitt (A) des Fahrzeugstützteils (10;10';50) verbunden und unter dem Fahrzeugstützteil (10;10';50) angeordnet ist, eine Hubeinrichtung (14;62) zum Anheben und Absenken des rückwärtigen Endabschnitts (9) des Fahrzeugstützteils (10;10';50), wobei in der angehobenen Stellung der rückwärtige Endabschnitt (9) bezüglich des vorderen Endabschnitts (A) derart angehoben ist, daß ein vertikaler Freiraum zwischen dem Fahrzeugstützteil (10;10';50) und der Parkfläche gebildet wird, der zum Einfahren eines Fahrzeugs auf die Parkfläche unterhalb des Fahrzeugstützteils (10;10';50) ausreicht, und wobei in der abgesenkten Stellung der rückwärtige Endabschnitt (9) nahe einer Bodenfläche liegt, wodurch ein Fahren eines Fahrzeugs von dem Fahrzeugstützteil (10;10';50) auf die Bodenfläche und von der Bodenfläche auf den Fahrzeugstützteil (10;10';50) möglich ist, wobei der Fahrzeugstützteil (10;10';50) die Form einer Plattform besitzt, die alle Räder eines Fahrzeugs tragen kann, und wobei die Hubeinrichtung (14;62) eine Einrichtung (56) zum Anheben und Absenken des vorderen Endabschnitts (A) der Plattform bezüglich der festen Stützeinrichtung (12,20,56,60) umfaßt,
dadurch gekennzeichnet, daß die feste Stützeinrichtung (12,20,56,60) eine horizontale Schwenkachse (18;58) bildet, die in einer vorbestimmten vertikalen Ebene angeordnet ist, welche den vorderen Endabschnitt (A) der Plattform in der angehobenen Stellung der Plattform schneidet, wobei die Plattform um die horizontale Schwenkachse (18;58) schwenkbar angebracht ist, die feste Stützeinrichtung (12,20,56,60) einen festen Stutzteil (12,20,60) und wenigstens einen beweglichen Teil (56) aufweist, der mit einem Ende an der horizontalen Schwenkachse (18;58) schwenkbar angelenkt ist, wobei die letztere an dem festen Stützteil vorgesehen ist, der bewegliche Teil (56) mit seinem anderen Ende am vorderen Endabschnitt (A) der Plattform (10;10';50) angebracht ist und daß der bewegliche Teil (56) mit der genannten vertikalen Ebene allgemein ausgerichtet ist, wenn die Plattform sich in der angehobenen Stellung befindet.

2. Parkvorrichtung nach Anspruch 1, dadurch gekennzeichnet, daß die Plattform (10;10';50) so ausgebildet ist, daß sie ein Fahrzeug derart trägt, daß bei Verwendung ein Endabschnitt des Fahrzeugs sich über den vorderen Endabschnitt (A) der Plattform erstreckt.

3. Parkvorrichtung nach Anspruch 1 oder 2, dadurch gekennzeichnet, daß in der angehobenen Stellung der rückwärtige Endabschnitt (9) über den vorderen Endabschnitt (A) um einen vorbestimmten Neigungswinkel angehoben ist.

4. Parkvorrichtung nach einem der vorangehenden Ansprüche, dadurch gekennzeichnet, daß die Plattform (10;10';50) eine obere Fahrzeugstützplattform ist und die Vorrichtung ferner eine untere Fahrzeugstützplattform (26;26'), die zum wahlweisen Anordnen auf der Parkfläche und in einer ersten Betriebsstellung unmittelbar unterhalb der oberen Fahrzeugstützplattform geeignet ist, sowie eine Einrichtung (28,30;34,36) zur Querbewegung der unteren Plattform (26;26') zwischen der ersten Betriebsstellung und einer ausgewählten zweiten Betriebsstellung umfaßt, in der die untere Plattform nicht unmittelbar unterhalb der oberen Plattform angeordnet ist.

5. Parkvorrichtung nach Anspruch 4, dadurch gekennzeichnet, daß die Vorrichtung eine erste Fahrzeugparkvorrichtung ist und daß wenigstens eine weitere Fahrzeugparkeinrichtung Seite an Seite damit vorgesehen ist.

6. Parkvorrichtung nach einem der vorangehenden Ansprüche, dadurch gekennzeichnet, daß der bewegliche Teil (56) der festen Stützeinrichtung an einem ersten Ende mit dem vorderen Endabschnitt (A) der Plattform (50) schwenkbar verbunden ist und an einem zweiten Ende mit dem festen Stützteil (60) schwenkbar verbunden ist.

7. Parkvorrichtung nach einem der vorangehenden Ansprüche, dadurch gekennzeichnet, daß die Vorrichtung Radeingriffseinrichtungen (24) aufweist, die mit dem vorderen Endabschnitt (A) der Plattform (10;10';50) zum Eingriff mit Rädern eines auf der Plattform angeordneten Fahrzeugs verbunden sind.

## Revendications

1. Un système de parcage permettant de parquer deux véhicules dans un espace unique comportant un membre de soutien de véhicule (10 ; 10' ; 50) destiné à soutenir un véhicule au-dessus d'une zone de parcage incluant une partie d'extrémité arrière (9) apte à permettre le déplacement d'un véhicule la traversant, ledit membre de soutien de véhicule (10 ; 10' ; 50) ayant en outre une partie d'extrémité avant (A) ; et un moyen de soutien fixe situé au sol (12, 20, 56, 60) - par exemple, une boîte de contrôle (12, 60), des barres de renforcement (20) - raccordé à ladite partie d'extrémité avant (A) dudit membre de soutien de véhicule (10 ; 10' ; 50) et situé au-dessous dudit membre de soutien de véhicule (10 ; 10' ; 50), un moyen de levage (14 ; 62) destiné à permettre l'élévation et l'abaissement de ladite partie d'extrémité arrière dudit membre de soutien de véhicule (10 ; 10'; 50) au moyen duquel dans ladite position élevée ladite extrémité arrière (9) est élevée en fonction de ladite partie d'extrémité avant (A) de telle manière que soit créé un dégagement vertical entre ledit membre de soutien de véhicule (10 ; 10' ; 50) et la zone de parcage suffisant à permettre l'entrée d'un véhicule dans la zone de parcage située sous le membre de soutien de véhicule (10 ; 10' ; 50), et au moyen duquel dans ladite position abaissée ladite partie d'extrémité arrière (9) est contiguë à la surface du sol permettant ainsi le déplacement d'un véhicule à partir dudit membre de soutien de véhicule (10 ; 10' ; 50) vers la surface du sol et de la surface du sol vers ledit membre de soutien de véhicule (10 ; 10' ; 50), ledit membre de soutien de véhicule (10 ; 10' ; 50) se présentant sous la forme d'une plate-forme apte à soutenir l'ensemble des roues d'un véhicule et ledit moyen de levage (14 ; 62) comporte un moyen (56) permettant la mise en oeuvre de l'élévation et de l'abaissement de ladite partie d'extrémité avant (A) de ladite plate-forme en fonction dudit moyen de soutien fixe (12, 20, 56, 60),
caractérisé en ce que ledit moyen de soutien fixe (12, 20, 56, 60) définit un axe de pivotement horizontal (18 ; 58) situé dans un plan vertical prédéterminé qui coupe ladite partie d'extrémité avant (A) de ladite plate-forme dans la position élevée de ladite plate-forme, ladite plate-forme étant disposée afin de pivoter selon ledit axe de pivotement horizontal (18 ; 58), ledit moyen de soutien fixe (12, 20, 56, 60) comportant un membre de soutien fixe (12, 20, 60) et au moins un membre mobile (56) constituant pivot raccordé par une extrémité audit axe de pivotement horizontal (18, 58), ce dernier étant fourni par le membre de soutien fixe (12, 20, 60), ledit membre mobile (56) étant raccordé au moyen de son autre extrémité à ladite partie d'extrémité avant (A) de ladite plate-forme (10 ; 10; 50) et dans lequel ledit membre mobile (56) est en alignement général avec ledit plan vertical lorsque ladite plate-forme est dans sa position élevée.

2. Un système de parcage selon la revendication 1, caractérisé en ce que ladite plate-forme (10 ; 10'; 50) présente une configuration lui permettant de soutenir un véhicule de telle manière qu'en cours d'utilisation une partie d'extrémité du véhicule dépasse au-dessus de ladite partie d'extrémité avant (A) de ladite plate-forme.

3. Un système de parcage selon l'une des revendications 1 ou 2 caractérisé en ce que dans ladite position élevée, ladite partie d'extrémité arrière (9) est élevée au-dessus de ladite partie d'extrémité avant (A) selon un angle d'inclinaison prédéterminé.

4. Un système de parcage selon l'une quelconque des revendications précédentes caractérisé en ce que ladite plate-forme (10 ; 10'; 50) est une plate-forme de soutien de véhicule supérieur et que ledit système comporte en outre une plate-forme de soutien de véhicule inférieur (26 ; 26') dont la situation dans la zone de parcage peut être sélectionnée et qui, dans une première position de fonctionnement, est située immédiatement au-dessous de ladite plate-forme de soutien de véhicule supérieur et un moyen (28 , 30 ; 34 , 36) destiné à déplacer transversalement ladite plate-forme inférieure (26 ; 26') entre la première position de fonctionnement et une seconde position de fonctionnement sélectionnée dans laquelle ladite plate-forme inférieure n'est pas située immédiatement au-dessous de ladite plate-forme supérieure.

5. Un système de parcage selon la revendication 4, caractérisé en ce que ledit système est un moyen de parcage d'un premier véhicule et qu'il permet en outre la mise en oeuvre d'au moins un autre moyen de parcage de véhicule placé côte à côte.

6. Un système de parcage selon l'une quelconque des revendications précédentes, caractérisé en ce que le membre mobile (56) du moyen de soutien fixe est raccordé en constituant pivot par une première extrémité à ladite partie d'extrémité avant (A) de ladite plate-forme (50) et raccordé en constituant pivot par une seconde extrémité audit membre de soutien fixe (60).

7. Un système de parcage selon l'une quelconque des revendications précédentes, caractérisé en ce que ledit système comporte en outre un moyen d'engagement de roue (24) associé à ladite partie d'extrémité avant (A) de ladite plate-forme (10 ; 10'; 50) destiné à engager les roues d'un véhicule placé sur la dite plate-forme.
